# EUROPÄISCHE PATENTANMELDUNG

(11) **EP 4 686 548 A1**
(43) Veröffentlichungstag der Anmeldung: **04.02.2026**
(21) Anmeldenummer: 25162967.1
(22) Anmeldetag: 11.03.2025
(51) Int. Cl.: B29C 49/42

(54) **BEHÄLTERBEHANDLUNGSANLAGE UMFASSEND EINE HERSTELLUNGSMASCHINE, EINE BLASFORMMASCHINE UND WENIGSTENS EINE WÄRMEAUSTAUSCHEINRICHTUNG**

(30) Priorität: 02.08.2024 DE 102024122108
(71) Anmelder: Krones AG, 93073 Neutraubling (DE)
(72) Erfinder: HIRDINA, Jochen, 93073 Neutraubling (DE)
(74) Vertreter: Grünecker Patent- und Rechtsanwälte PartG mbB

(57) **Zusammenfassung**

Behälterbehandlungsanlage umfassend eine Herstellungsmaschine für Vorformlinge, eine Blasformmaschine und wenigstens eine Wärmeaustauscheinrichtung, wobei die Herstellungsmaschine und die Blasformmaschine miteinander verblockt sind, wobei die wenigstens eine Wärmeaustauscheineinrichtung zum Wärmeaustausch zwischen der Herstellungsmaschine und wenigstens einer Komponente der Behälterbehandlungsanlage ausgebildet ist.

## Beschreibung

Die vorliegende Erfindung betrifft eine Behälterbehandlungsanlage umfassend eine Herstellungsmaschine für Vorformlinge, eine Blasformmaschine und wenigstens eine Wärmeaustauscheinrichtung gemäß unabhängigem Anspruch 1 und ein Verfahren zum Herstellen von Behältern in einer Behälterbehandlungsanlage gemäß unabhängigem Anspruch 9.

### Stand der Technik

Behälterbehandlungsanlagen zum Behandeln von Behältern sind aus dem Stand der Technik hinreichend bekannt.

In Behälterbehandlungsanlagen werden bei der Herstellung von Vorformlingen und der Behandlung von Behältern typischerweise große Energiemengen frei. Aus Nachhaltigkeits- und Kostengründen ist eine Widerverwendung der freiwerden Energiemenge in der Behälterbehandlungsanlage wünschenswert.

### Technische Aufgabe

Ausgehend vom bekannten Stand der Technik besteht zu lösende technische Aufgabe der vorliegenden Erfindung darin, eine Behälterbehandlungsanlage und ein Verfahren zum Herstellen von Behältern anzugeben, mittels welchem Behälter auf energetisch effiziente Weise hergestellt werden können.

### Lösung

Diese Aufgabe wird durch die Behälterbehandlungsanlage umfassend eine Herstellungsmaschine für Vorformlinge, eine Blasformmaschine und wenigstens eine Wärmeaustauscheinrichtung gemäß unabhängigem Anspruch 1 und das Verfahren zum Herstellen von Behältern in einer Behälterbehandlungsanlage gemäß unabhängigem Anspruch 9 gelöst. Bevorzugte Ausführungsformen sind in den abhängigen Ansprüchen erfasst.

Die erfindungsgemäße Behälterbehandlungsanlage umfasst eine Herstellungsmaschine für Vorformlinge, eine Blasformmaschine und wenigstens eine Wärmeaustauscheinrichtung, wobei die Herstellungsmaschine und die Blasformmaschine miteinander verblockt sind und die wenigstens eine Wärmeaustauscheineinrichtung zum Wärmeaustausch zwischen der Herstellungsmaschine und wenigstens einer Komponente der Behälterbehandlungsanlage ausgebildet ist.

Unter einer Herstellungsmaschine kann jede Maschine verstanden werden, welche zum Herstellen von Vorformlingen aus einem thermoplastischen oder anderen Material geeignet ist. Beispielsweise kann es sich bei der Herstellungsmaschine um eine Spritzgussmaschine (Injection Moulding) handeln. Alternativ kann es sich bei der Herstellungsmaschine auch um eine Compression-Moulding Maschine handeln.

Bei der Blasformmaschine kann es sich beispielsweise um eine Streckblasmaschine, welche zum Ausformen von Vorformlingen zu Behältern mit Blasfluft ausgestaltet ist, oder um eine Liquiform-Maschine handeln. Die Liquiform-Maschine kann zum Ausformen von Vorformlingen zu Behältern mit einer Flüssigkeit ausgestaltet sein. Bei der Flüssigkeit kann es sich um jede beliebige Flüssigkeit, wie beispielsweise Wasser oder eine sterilisierende Flüssigkeit handeln. Es kann vorgesehen sein, dass die Flüssigkeit nach dem Ausformen wieder aus dem Behälter entfernt wird. Bei der Flüssigkeit kann es sich jedoch auch um ein Produkt handeln mittels welchem der Behälter letztendlich auch befüllt werden soll. Das Produkt kann somit auch nach dem Ausformen in dem Behälter verbleiben, so dass ein separater Schritt zum Befüllen nicht notwendig ist. Auf diese Weise kann der Behälter gleichzeitig ausgeformt und befüllt werden.

Unter der Wärmeaustauscheinrichtung kann jede Einrichtung verstanden werden, welche zum Austausch einer Wärmemenge zwischen der Herstellungsmaschine und der wenigstens einen Komponente der Behälterbehandlungsanlage ausgebildet ist. Unter einem Austausch kann beispielweise ein direkter oder indirekter Wärmeaustausch verstanden werden. Unter dem direkten Wärmeaustausch kann beispielsweise ein direktes Zuführen eines Prozessmediums von der Herstellungsmaschine an die wenigstens eine Komponente der Behälterbehandlungsanlage und/oder ein direktes Zuführen eines Prozessmediums von der einen Komponente der Behälterbehandlungsanlage an die Herstellungsmaschine verstanden werden. Unter dem indirekten Wärmeaustausch kann beispielsweise ein Wärmeaustausch zwischen einem Prozessmedium der Herstellungsmaschine und einem Prozessmedium der wenigstens einen Komponente verstanden werden. Der indirekte Wärmeaustausch kann beispielsweise über eine Wärmerückgewinnungseinrichtung, wie einen Wärmetauscher, realisiert werden.

Unter einem Prozessmedium soll im Folgenden ein flüssiges oder gasförmiges Medium verstanden werden, das Wärme aufnehmen und Wärme abgeben kann. Das Prozessmedium muss, insbesondere wenn eine Zufuhr oder Abfuhr von Wärme erfolgt, seinen Aggregatzustand nicht behalten und kann auch einen Wechsel vom flüssigen in den gasförmigen oder vom gasförmigen in den flüssigen Aggregatzustand erfahren. Als Prozessmedium kann beispielsweise Luft (Heißluft oder Kaltluft) und/oder Wasser und/oder Wasserdampf und/oder überkritisches Wasser verwendet werden. Ferner können im Sinne der Offenbarung auch mehrere verschiedene Prozessmedien zum Einsatz kommen, sodass beispielsweise ein oder mehrere gasförmige Prozessmedien und ein oder mehrere flüssige Prozessmedien verwendet werden, die beispielsweise in geschlossenen Kreisläufen durch die Anlage oder Teile davon (insbesondere die Herstellungsmaschine und die Komponente) zirkulieren können.

Das miteinander verblocken der Herstellungsmaschine und der Blasformmaschine kann so verstanden werden, dass ein Betrieb der Herstellungsmaschine und ein Betrieb der Blasformmaschine aufeinander abgestimmt ist und die beiden Maschinen über eine Transportvorrichtung auf direkte und/oder indirekte Weise verbunden sind, so dass die von der Herstellungsmaschine hergestellten Vorformlinge an die Blasformmaschine übergeben und von dieser zu Behältern ausgeblasen werden können. Dabei kann zwischen der Herstellungsmaschine und der Blasformmaschine auch ein zumindest zeitweiliges ungeordnetes Zwischenspeichern der Vorformlinge erfolgen. Alternativ kann vorgesehen sein, dass die Vorformlinge von der Herstellungsmaschine geordnet der Blasformmaschine zugeführt werden, insbesondere ohne dass ein ungeordnetes Zwischenspeichern der Vorformlinge nach dem Verlassen der Herstellungsmaschine und vor dem Eingeben der Vorformlinge in die Blasformmaschine erfolgt.

Unter der wenigstens einen Komponente der Behälterbehandlungsanlage kann jede beliebige Komponente der Behälterbehandlungsanlage verstanden werden, zwischen welcher Wärme mit der Herstellungsmaschine ausgetauscht werden kann. Es kann sich hierbei beispielsweise um eine Behälterbehandlungsmaschine (etwa die Blasformmaschine) der Behälterbehandlungsanlage, um ein Bauteil einer Behälterbehandlungsmaschine, um einen durch eine Behälterbehandlungsmaschine behandelten Vorformlinge und/oder Behälter oder jede andere Komponente der Behälterbehandlungsanlage handeln. Weiterhin kann es sich bei der wenigstens einen Komponente auch um eine Komponente der Herstellungsmaschine handeln, so dass beispielsweise auch Wärme zwischen zwei Komponenten der Herstellungsmaschine ausgetauscht werden kann.

Bei den Behältern kann es sich um in der getränkeverarbeitenden Industrie zum Einsatz kommende Flaschen handeln. Es kann sich alternativ jedoch auch um jede andere Art von Behälter, wie beispielsweise eine Dose oder eine Spritze, welche zum Aufnehmen eines flüssigen und/oder pastösen Mediums geeignet ist, handeln. Bei dem Behälter kann es sich auch um einen in der Lebensmittelindustrie, der medizinischen Industrie oder der Kosmetikindustrie verwendeten Behälter handeln.

Mittels der erfindungsgemäßen Behälterbehandlungsanlage kann Wärme zwischen der Herstellungsmaschine und/oder der wenigstens einen Komponente ausgetauscht werden und somit beispielsweise eine an der Herstellungsmaschine und/oder der wenigstens einen Komponente freiwerdende Wärmemenge an einer anderen Stelle der Behälterbehandlungsanlage wieder genutzt werden. Somit kann der Energieverbrauch der Behälterbehandlungsanlage bei der Herstellung von Behältern reduziert werden und ein energieeffizienter Betrieb der Behälterbehandlungsanlage erreicht werden.

In einer Ausführungsform kann es vorgesehen sein, dass die Herstellungsmaschine und die Blasformmaschine über wenigstens eine Transportvorrichtung zum Massentransport von Vorformlingen und/oder über wenigstens eine Transportvorrichtung zum geordneten Transport von Vorformlingen miteinander verblockt sind. Auf diese Weise kann eine Art des Transports der Vorformlinge flexibel basierend auf einer Anforderung der nachgeordneten Blasformmaschine gewählt und eine flexibel einsetzbare Behälterbehandlungsanlage bereitgestellt werden.

Es kann weiterhin vorgesehen sein, dass die Wärmeaustauscheinrichtung zum direkten Austausch eines Prozessmediums zwischen der Herstellungsmaschine und der wenigstens Komponente ausgebildet ist. Auf diese Weise kann die Wärmeaustauscheinrichtung aus besonders einfache Weise realisiert werden und eine in dem Prozessmedium enthaltene Energiemenge direkt von der Herstellungsmaschine und/oder der wenigstens einen Komponente genutzt werden, wodurch der Energieverbrauch der gesamten Behälterbehandlungsanlage reduziert werden kann.

In einer Ausführungsform kann das Prozessmedium ein Kühlmedium der Herstellungsmaschine umfassen und die Wärmeaustauscheinrichtung ausgebildet sein, das Kühlmedium der wenigstens einen Komponente zum Kühlen oder Erwärmen eines Bauteils der Komponente und/oder zum Kühlen oder Erwärmen eines mittels der Komponente behandelten Vorformlings und/oder Behälters zuzuführen. Das Bauteil kann als eine Unterkomponente der Komponente verstanden werden. Mit dem Bauteil kann beispielsweise ein Behandlungsschritt an dem Vorformling und/oder Behälter durchgeführt werden. Das Bauteil kann jedoch auch indirekt an einem Behandlungsschritt an dem Vorformling und/oder Behälter beteiligt sein. Es kann sich jedoch auch um ein Bauteil handeln, welches weder direkt noch indirekt an der Behandlung des Vorformlings und/oder Behälters beteiligt ist. Handelt es sich bei der Komponente beispielsweise um die Blasformmaschine kann das Bauteil eine Blasform, eine Heizvorrichtung oder jedes andere Bauteil der Blasformmaschine sein. Auf diese Weise kann das von der Herstellungsmaschine verwendete Kühlmedium auf flexible Weise zum Kühlen oder Erwärmen von Bauteilen und Vorformlingen und/oder Behältern verwendet werden und der Energieverbrauch der Behälterbehandlungsanlage weiter reduziert werden.

In einer Ausführungsform kann die wenigstens eine Komponente eine Temperiervorrichtung für Vorformlinge und/oder eine Temperiervorrichtung für Behälter umfassen. Temperiervorrichtungen zeichnen sich durch einen besonders hohen Energieverbrauch aus und generieren typischerweise große Wärmemengen, so dass durch einen Wärmeaustausch zwischen Herstellungsmaschine und der jeweiligen Temperiervorrichtung der Energieverbrauch der Behälterbehandlungsanlage signifikant reduziert werden kann.

Ferner kann es vorgesehen sein, dass die Wärmeaustauscheinrichtung ausgebildet ist, eine in der Herstellungsmaschine freiwerdende Wärmemenge der Temperiervorrichtung für Vorformlinge und/oder der Temperiervorrichtung für Behälter zum Temperieren eines Bauteils der jeweiligen Temperiervorrichtung und/oder zum Temperieren der Vorformlinge und/oder Behälter zuzuführen. Somit kann die ausgetauschte Wärmemenge in der Temperiervorrichtung auf flexible Weise wieder genutzt werden und der Energiebedarf der Behälterbehandlungsanlage weiter reduziert werden.

In einer Weiterbildung einer der beiden vorherigen Ausführungsformen kann die Wärmeaustauscheinrichtung ausgebildet sein, eine in der Temperiervorrichtung für Vorformlinge und/oder in der Temperiervorrichtung für Behälter freiwerdende Wärmemenge der Herstellungsmaschine zuzuführen. Da in der Temperiervorrichtung typischerweise große Wärmemengen freiwerden, kann der Energiebedarf der Behälterbehandlungsanlage durch Wiederverwendung der in den Temperiervorrichtung freiwerdenden Wärmemenge signifikant reduziert werden.

In einer Weiterbildung der vorherigen Ausführungsform kann die Wärmeaustauscheinrichtung ausgebildet sein, die in der Temperiervorrichtung für Behälter und/oder der Temperiervorrichtung für Behälter freiwerdende Wärmemenge der Herstellungsmaschine zum Temperieren eines Bauteils und/oder zum Temperieren eines Materials zum Herstellen von Vorformlingen zuzuführen. Somit kann die ausgetauschte Wärmemenge in der Herstellungsmaschine auf flexible Weise für verschiedene Prozesse genutzt werden.

Erfindungsgemäß ist weiterhin ein Verfahren zum Herstellen von Behältern in einer Behälterbehandlungsanlage vorgesehen, wobei die Behälterbehandlungsanlage eine Herstellungsmaschine für Vorformlinge, eine Blasformmaschine und wenigstens eine Wärmeaustauscheinrichtung umfasst und die Herstellungsmaschine und die Blasformmaschine miteinander verblockt sind, wobei die wenigstens eine Wärmeaustauscheineinrichtung zum Wärmeaustausch zwischen der Herstellungsmaschine und wenigstens einer Komponente der Behälterbehandlungsanlage ausgebildet ist.

Mittels des erfindungsgemäßen Verfahrens kann Wärme zwischen der Herstellungsmaschine und/oder der wenigstens einen Komponente ausgetauscht werden und somit beispielsweise eine an der Herstellungsmaschine und/oder der wenigstens einen Komponente freiwerdende Wärmemenge an einer anderen Stelle der Behälterbehandlungsanlage wieder genutzt werden. Auf diese Weise wird der Energieverbrauch der Behälterbehandlungsanlage bei der Herstellung von Behältern reduziert und ein energieeffizienter Betrieb der Behälterbehandlungsanlage ermöglicht.

In einer Ausführungsform des Verfahrens kann die Herstellungsmaschine und die Blasformmaschine über wenigstens eine Transportvorrichtung zum Massentransport von Vorformlingen und/oder über wenigstens eine Transportvorrichtung zum geordneten Transport von Vorformlingen miteinander verblockt sein. Auf diese Weise kann eine Art des Transports der Vorformlinge flexibel basierend auf einer Anforderung der nachgeordneten Blasformmaschine gewählt werden.

Weiterhin kann es vorgesehen sein, dass ein Prozessmedium zwischen der Herstellungsmaschine und der wenigstens einen Komponente mittels der Wärmeaustauscheinrichtung direkt ausgetauscht wird. Somit kann die Wärmeaustauscheinrichtung aus besonders einfache Weise realisiert werden und eine in dem Prozessmedium enthaltene Energiemenge von der wenigstens einen Komponente genutzt werden, wodurch der Energieverbrauch der gesamten Behälterbehandlungsanlage reduziert werden kann.

In einer Weiterbildung der vorherigen Ausführungsform kann es vorgesehen sein, dass das Prozessmedium ein Kühlmedium der Herstellungsmaschine umfasst und das Kühlmedium der wenigstens einen Komponente mittels der Wärmeaustauscheinrichtung zum Kühlen eines Bauteils der Komponente und/oder eines mittels der Komponente behandelten Vorformlings und/oder Behälters zugeführt wird. Auf diese Weise kann das von der Herstellungsmaschine verwendete Kühlmedium auf besonders flexible Weise zum Kühlen von Bauteilen und Vorformlingen und/oder Behältern verwendet werden und der Energieverbrauch der Behälterbehandlungsanlage weiter reduziert werden.

In einer Ausführungsform des Verfahrens kann die wenigstens eine Komponente eine Temperiervorrichtung für Vorformlinge und/oder eine Temperiervorrichtung für Behälter umfassen. Temperiervorrichtungen zeichnen sich durch einen besonders hohen Energieverbrauch aus und generieren typischerweise große Wärmemengen, so dass durch einen Wärmeaustausch zwischen Herstellungsmaschine und der jeweiligen Temperiervorrichtung der Energieverbrauch der Behälterbehandlungsanlage signifikant reduziert werden kann.

In einer Weiterbildung der vorherigen Ausführungsform kann es vorgesehen sein, dass eine in der Herstellungsmaschine freiwerdende Wärmemenge der Temperiervorrichtung für Vorformlinge und/oder der Temperiervorrichtung für Behälter mittels der Wärmeaustauscheinrichtung zum Temperieren eines Bauteils der jeweiligen Temperiervorrichtung und/oder zum Temperieren der Vorformlinge und/oder Behälter zugeführt wird. Somit kann die ausgetauschte Wärmemenge in der Temperiervorrichtung auf flexible Weise für verschiedene Prozesse genutzt werden.

In einer Weiterbildung einer der beiden vorherigen Ausführungsformen kann es vorgesehen sein, dass eine in der Temperiervorrichtung für Vorformlinge und/oder der Temperiervorrichtung für Behälter freiwerdende Wärmemenge, der Herstellungsmaschine mittels der Wärmeaustauscheinrichtung, insbesondere zum Temperieren eines Bauteils und/oder zum Temperieren eines Materials zum Herstellen von Vorformlingen, zugeführt wird. Da in der Temperiervorrichtung typischerweise große Wärmemengen freiwerden, kann der Energiebedarf der Behälterbehandlungsanlage durch Wiederverwendung der in den Temperiervorrichtung freiwerdenden Wärmemenge signifikant reduziert werden. Weiterhin kann die ausgetauschte Wärmemenge in der Herstellungsmaschine auf flexible Weise genutzt werden.

### Kurze Figurenbeschreibung

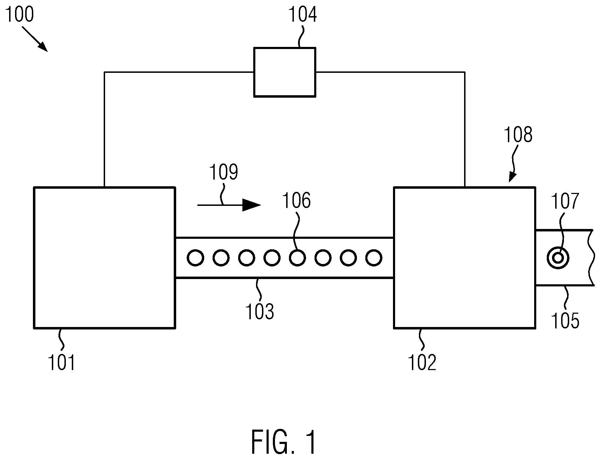

- **Fig. 1**:: Behälterbehandlungsanlage umfassend eine Herstellungsmaschine, eine Blasformmaschine und wenigstens eine Wärmeaustauscheinrichtung gemäß einer Ausführungsform

### Ausführliche Figurenbeschreibung

Fig. 1 zeigt eine Behälterbehandlungsanlage 100 umfassend eine Herstellungsmaschine 101, eine Blasformmaschine 102 und wenigstens eine Wärmeaustauscheinrichtung 104 gemäß einer Ausführungsform. Erfindungsgemäß sind die Herstellungsmaschine 101 und die Blasformmaschine 102 miteinander verblockt und die Wärmeaustauscheinrichtung 104 zum Wärmeaustausch zwischen der Herstellungsmaschine 101 und wenigstens einer Komponente 108 der Behälterbehandlungsanlage 100 ausgebildet.

Weiterhin kann die Behälterbehandlungsanlage 100 eine Transportvorrichtung 103 zum Transport von Vorformlingen 106 zwischen der Herstellungsmaschine 101 und der Blasformmaschine 102 sowie eine Transportvorrichtung 105 zum Transport von Behältern 107 von der Blasformmaschine 102 zu einer weiteren optionalen hier nicht explizit dargestellten Behälterbehandlungsmaschine der Behälterbehandlungsanlage 100 umfassen.

Die im Zusammenhang mit der Fig. 1 dargestellte Ausgestaltung der Behälterbehandlungsanlage 100 ist als beispielhaft zu verstehen.

So kann die Behälterbehandlungsanlage 100 neben der erfindungsgemäßen Herstellungsmaschine 101, Blasformmaschine 102 und wenigstens einen Wärmeaustauscheinrichtung 104 und den optionalen Transportvorrichtungen 103, 105 weitere hier nicht explizit dargestellte Komponenten umfassen. Beispielsweise können weitere Behälterbehandlungsmaschinen, wie ein Füller, ein Etikettierer, ein Verschließer, ein Pasteur, weitere Transportvorrichtungen und/oder weitere hier nicht explizit erwähnte Komponenten vorgesehen sein.

In der hier gezeigten Ausführungsform ist die wenigstens einen Komponente 108 die Blasformmaschine 102. Diese spezifische Ausgestaltung der wenigstens einen Komponente 108 ist als beispielhaft zu verstehen. So kann es sich bei der wenigstens einen Komponente 108 auch um jede andere Komponente der Behälterbehandlungsanlage 100 handeln.

Im Allgemeinen kann es sich bei der wenigstens einen Komponente 108 um eine Behälterbehandlungsmaschine der Behälterbehandlungsanlage 100, um ein Bauteil einer Behälterbehandlungsmaschine (wie etwa eine Blasform), um einen durch eine Behälterbehandlungsmaschine behandelten Vorformlinge und/oder Behälter oder jede andere Komponente 108, zwischen welcher über die Wärmeaustauscheinrichtung 104 mit der Herstellungsmaschine 101 Wärme ausgetauscht werden kann, handeln.

Bei der Herstellungsmaschine 101 kann es sich um jede zur Herstellung von Vorformlingen mittels eines thermoplastischen Materials geeignete Maschine handeln. Beispielweise kann die Herstellungsmaschine 101 als Spritzgussmaschine oder Compression-Moulding Maschine ausgestaltet sein. Die eben genannten beispielhaften Ausgestaltungen sind als nicht beschränkend zu verstehen, so dass die Herstellungsmaschine 101 auch auf jede andere geeignete Weise ausgestaltet sein kann.

Bei der Blasformmaschine 102 kann es sich um jede zur Ausformung von Vorformlingen zu Behältern geeignete Maschine handeln. Beispielsweise kann die Blasformmaschine als Streckblasmaschine oder Extrusionsblasformmaschine ausgestaltet sein. Die Blasformmaschine kann beispielsweise ein Karussell mit einer Vielzahl von Blasformen umfassen, in welchen die Vorformlinge zu Behälter ausgeblasen werden können. Die eben beschriebene Ausgestaltung der Blasformmaschine 102 ist als nicht beschränkend zu verstehen, so dass auch jede andere geeignete Ausgestaltung der Blasformmaschine denkbar ist. Beispielsweise kann die Blasformmaschine auch als linear arbeitende Blasformmaschine ausgestaltet sein.

In der Ausführungsform der Fig. 1 ist die Blasformmaschine 102 stromab der Herstellungsmaschine 101 bezüglich einer Transportrichtung 109 der Vorformlinge 106 angeordnet.

Erfindungsgemäß sind die Herstellungsmaschine 101 und die Blasformmaschine 102 miteinander verblockt. Dies kann so verstanden werden, dass ein Betrieb der Herstellungsmaschine 101 und der Blasformmaschine 102 aufeinander abgestimmt ist und die beiden Maschinen über eine Transportvorrichtung 103 auf direkte und/oder indirekte Weise verbunden sind, so dass die von der Herstellungsmaschine 101 hergestellten Vorformlinge 106 an die Blasformmaschine 102 überführt und von dieser zu Behältern 107 ausgeblasen werden können. Der Transport der Vorformlinge mit der Transportvorrichtung 103 kann bevorzugt geordnet und ohne (ungeordnete) Zwischenspeicherung der Vorformlinge erfolgen, sodass Vorformlinge, die die Herstellungsmaschine verlassen, direkt und stets auf dieselbe Weise (insbesondere etwa mit derselben Temperatur der Vorformlinge) der Blasformmaschine zugeführt werden.

Der Betrieb der Herstellungsmaschine 101 und der Blasformmaschine 102 sowie jeder weiteren Komponente der Behälterbehandlungsanlage 100 kann über eine Steuereinheit (wie etwa einen Computer mit Prozessor und zugeordnetem Speicher sowie in dem Speicher ausführbar hinterlegtem Programmcode) gesteuert werden. Beispielsweise kann der Betrieb der Herstellungsmaschine 101 und der Blasformmaschine 102 über die Steuereinheit abgestimmt sein.

In der hier diskutierten Ausführungsform sind Herstellungsmaschine 101 und Blasformmaschine 102 über die lineare Transportvorrichtung 103 miteinander verblockt, wobei die Vorformlinge 106 mittels der Transportvorrichtung 103 geordnet von der Herstellungsmaschine 101 an die Blasformmaschine 102 übergeben werden. In der Blasformmaschine 102 können die Vorformlinge 106 dann zu Behältern 107 ausgeblasen werden und mittels der optionalen Transportvorrichtung 105 weiteren optional stromab der Blasformmaschine 102 angeordneten Komponenten der Behälterbehandlungsanlage 100 zugeführt werden.

Die in der Fig. 1 beschriebene Art der Verblockung der Herstellungsmaschine 101 und der Blasformmaschine 102 über die lineare Transportvorrichtung 103 zum geordneten Transport von Vorformlingen 106 ist als beispielhaft zu verstehen. Es kann beispielsweise auch vorgesehen sein, dass die Transportvorrichtung 103 als wenigstens ein oder mehrere Drehsterne ausgebildet ist, mittels welcher die Vorformlinge auf geordnete Weise von der Herstellungsmaschine 101 an die Blasformmaschine 102 übergeben werden können.

Alternativ kann die Transportvorrichtung 103 beispielsweise auch als Transportvorrichtung zum Massentransport von Vorformlingen ausgestaltet sein.

Weiterhin kann es auch vorgesehen sein, dass die Vorformlinge 106 mittels einer Kombination aus wenigstens einer zum Massentransport und wenigstens einer zum geordneten Transport ausgestalteten Transportvorrichtung von der Herstellungsmaschine 101 an die Blasformmaschine 102 übergeben werden. Die beiden Transportvorrichtungen können beispielsweise über eine Vorformlingsvereinzelungsvorrichtung miteinander verbunden sein, mittels welcher die Vorformlinge 106 der zum geordneten Transport ausgestalteten Transportvorrichtung auf geordnete Weise übergeben werden können.

Weiterhin kann es beispielsweise auch vorgesehen sein, dass die Vorformlinge 106 mittels einer ersten Transportvorrichtung von der Herstellungsmaschine 101 in eine optionale Speichereinrichtung geführt werden und von der optionalen Speichereinrichtung mittels einer zweiten Transportvorrichtung der Blasformmaschine 102 zugeführt werden. In diesem Fall kann es beispielsweise vorgesehen sein, dass die Vorformlinge der optionalen Speichereinrichtung mittels der ersten Transportvorrichtung im ungeordneten Massentransport und der Blasformmaschine 102 von der Speichereinrichtung mittels der zweiten Transportvorrichtung in geordneter Weise zugeführt werden.

Wie weiter oben bereits beschrieben, umfasst die Behälterbehandlungsanlage 100 erfindungsgemäß wenigstens eine Wärmeaustauscheinrichtung 104. Bei der wenigstens einen Wärmeaustauscheinrichtung 104 kann es sich um jede Einrichtung handeln, welche zum Austausch von Wärme zwischen der Herstellungsmaschine 101 und der wenigstens einen Komponente 108 geeignet ist.

Bei dem Wärmeaustausch kann es sich um einen direkten und/oder indirekten Wärmeaustausch handeln.

Der direkte Wärmeaustausch ist dabei so zu verstehen, dass ein Prozessmedium zwischen der Herstellungsmaschine 101 und der wenigstens einen Komponente 108, welche in der Ausführungsform der Fig. 1 die Blasformmaschine 102 ist, direkt ausgetauscht werden kann. Dies bedeutet, dass das Prozessmedium der Herstellungsmaschine 101 der wenigstens einen Komponente 108 direkt zugeführt wird oder das Prozessmedium von der wenigstens einen Komponente 108 der Herstellungsmaschine 101 direkt zugeführt wird.

In diesem Fall kann es beispielsweise vorgesehen sein, dass ein Prozessmedium der Herstellungsmaschine 101, der wenigstens einen Komponente 108 zum Erwärmen oder Abkühlen der wenigstens einen Komponente 108 und/oder zum Erwärmen oder Abkühlen eines durch wenigstens eine Komponente 108 behandelten Vorformlings und/oder Behälters zugeführt wird. Weiterhin kann es vorgesehen sein, dass das Prozessmedium, nachdem es in der wenigstens einen Komponente 108 zum Erwärmen oder Abkühlen genutzt wurde, über eine weitere Leitung wieder zur Herstellungsmaschine 101 zurückgeführt wird. Beispielsweise kann ein Kreislauf zur Zirkulation des Prozessmediums zwischen Herstellungsmaschine 101 und der wenigstens einen Komponente 108 vorgesehen sein. In der Herstellungsmaschine 101 kann dann durch das Prozessmedium Wärme aufgenommen werden, die anschließend an die Komponente abgegeben werden kann oder umgekehrt. Das Prozessmedium dient in diesem Fall zum Kühlen oder Erwärmen der Herstellungsmaschine oder eines Teils davon (etwa eines Spritzgusswerkzeugs einer Spritzgussmaschine als Ausführungsform einer Herstellungsmaschein) und weiterhin zum Erwärmen oder Kühlen der Komponente, wobei durch die Übertragung von Wärme von der Herstellungsmaschine an die Komponente (oder umgekehrt) durch das Prozessmedium der Wärmeaustauscht bewirkt wird.

Weiterhin kann auch umgekehrt vorgesehen sein, dass ein Prozessmedium der wenigsten einen Komponente 108, der Herstellungsmaschine 101 zum Erwärmen oder Abkühlen eines Bauteils, eines Herstellungsmaterials und/oder eines durch die Herstellungsmaschine 101 hergestellten Vorformlings zugeführt wird.

Der indirekte Wärmeaustausch ist wiederum so zu verstehen, dass Wärme zwischen einem ersten Prozessmedium der Herstellungsmaschine 101 und einem zweiten Prozessmedium der wenigstens einen Komponente 108 indirekt über einen Wärmerückgewinnungseinrichtung, wie beispielsweise einen Wärmetauscher, ausgetauscht wird. In diesem Fall kann es beispielsweise vorgesehen sein, dass das erste Prozessmedium durch eine erste Leitung und das zweite Prozessmedium durch eine zweite Leitung zirkuliert wird und die beiden Leitungen zumindest teilweise (etwa im Wärmetauscher) im thermischen Kontakt miteinander stehen, so dass Wärme zwischen den beiden Prozessmedien ausgetauscht werden kann.

Die in der Fig. 1 beschriebene Ausführungsform, bei welcher die Wärmeaustauscheinrichtung 104 zum Wärmeaustausch zwischen Herstellungsmaschine 101 und Blasformmaschine 102 ausgestaltet ist, ist als beispielhaft zu verstehen.

Die Wärmeaustauscheinrichtung 104 kann generell auch zum Wärmeaustausch zwischen der Herstellungsmaschine 101 und jeder anderen Komponente 108 der Behälterbehandlungsanlage 100 ausgestaltet sein. Weiterhin kann die Behälterbehandlungsanlage 100 auch mehr als eine Wärmeaustauscheinrichtung 104 umfassen. Beispielswiese kann es vorgesehen sein, dass eine Wärmeaustauscheinrichtung 104, wie in der Fig. 1 gezeigt, zum Wärmeaustausch zwischen Herstellungsmaschine 101 und Blasformmaschine 102 und wenigstens eine weitere Wärmeaustauschvorrichtung 104 zum Wärmeaustausch zwischen Herstellungsmaschine 101 und wenigstens einer weiteren Komponente der Behälterbehandlungsanlage 100, wie beispielsweise einem optionalen Pasteur, vorgesehen ist. Ferner muss die Wärmeaustauscheinrichtung nicht zwangsläufig, wie in der Fig. 1 dargestellt, zum Wärmeaustausch zwischen Herstellungsmaschine 101 und Blasformmaschine 102 ausgestaltet sein, sondern kann beispielsweise auch nur zum Wärmeaustausch zwischen der Herstellungsmaschine 101 und wenigstens einer Komponente der Behälterbehandlungsanlage 100, welche von der Blasformmaschine 102 verschieden ist, ausgestaltet sein.

Wie weiter oben bereits beschrieben, kann zum Wärmeaustausch der Austausch eines Prozessmediums zwischen der Herstellungsmaschine 101 und der wenigstens einen Komponente 108, bei welcher es sich in der Ausführungsform der Fig. 1 um die Blasformmaschine 102 handelt, vorgesehen sein.

In der Herstellungsmaschine 101 können eine Vielzahl von Prozessmedien verwendet werden, welche zum Erwärmen oder Abkühlen von Bauteilen der Herstellungsmaschine 101, von Herstellungsmaterial für Vorformlinge und/oder von durch die Herstellungsmaschine erzeugten Vorformlingen verwendet werden.

Des Weiteren kann es auch vorgesehen sein, Bauteile der Herstellungsmaschine über Heizvorrichtungen zu erwärmen.

Sowohl die in den Prozessmedien der Herstellungsmaschine enthaltene Wärmemenge als auch die von den erhitzten Bauteilen der Herstellungsmaschine abgegebene Wärmemenge kann mittels der Wärmeaustauschvorrichtung 104 mit der wenigstens einen Komponente 108 der Behälterbehandlungsanlage 100 ausgetauscht wurden. Weiterhin kann auch ein zum Kühlen verwendetes Prozessmedium durch die Wärmeaustauscheinrichtung mit der wenigstens einen Komponente 108 ausgetauscht werden und die dem Kühlmedium ursprünglich zum Kühlen zugeführte Energiemenge auch an andere Stelle der Behälterbehandlungsanlage 100 genutzt werden. Auf diese Weise kann der Energieverbrauch der gesamten Behälterbehandlungsanlage 100 reduziert werden kann.

Bei dem Prozessmedium der Herstellungsmaschine 101 kann es sich beispielsweise um ein Kühlmedium handeln, mittels welchem Bauteile der Herstellungsmaschine 101 gekühlt werden können. Das Kühlmedium kann beispielsweise zum Kühlen einer Ausformvorrichtung der Herstellungsmaschine 100 vorgesehen sein. Im Falle einer Spritzgussmaschine kann es sich hierbei beispielsweise um einen Injektor, welcher zum Spritzgießen der Vorformlinge verwendet wird, oder um eine Form, insbesondere ein Formwerkzeug zum Formen der Vorformlinge handeln. Bei dem Prozessmedium kann es sich jedoch beispielsweise auch um Heißluft handeln, mittels welcher das Herstellungsmaterial bevor dieses der Ausformvorrichtung der Herstellmaschine 101, wie beispielsweise einem Injektor der Spritzgussmaschine, zugeführt wird, erwärmt werden kann. Weiterhin kann es sich bei dem Prozessmedium auch um Kühlluft handeln, welche in der Herstellungsmaschine in einem Kühlbereich zum Kühlen der fertig hergestellten Vorformlinge verwendet werden kann.

Durch den Austausch eines Prozessmediums der Herstellungsmaschine 101 mit der wenigstens einen Komponente 108 über die Wärmeaustauscheinrichtung 104, können in der Herstellungsmaschine 101 freiwerdende Wärmemengen beziehungsweise zum Aufwärmen oder Abkühlen eines Prozessmediums aufgewendet Energiemengen an anderer Stelle der Behälterbehandlungsmaschine wieder genutzt werden. Entsprechend kann es auch vorgesehen sein, dass ein Prozessmedium der wenigstens einen Komponente 108 der Behälterbehandlungsanlage 100 über die Wärmeaustauscheinrichtung 104 der Herstellungsmaschine 101 zugeführt wird und in der Herstellungsmaschine 101 zum Abkühlen oder Erwärmen eines Bauteils, eines Herstellungsmaterials für Vorformlinge und/oder der fertig hergestellten Vorformlinge verwendet wird.

Auf diese Weise kann der Energiebedarf der gesamten Behälterbehandlungsanlage reduziert werden, wodurch ein nachhaltigerer und kosteneffizienterer Betrieb der Behälterbehandlungsanlage erreicht werden kann.

Umfasst die in der Fig. 1 gezeigte Blasformmaschine 102 beispielsweise eine Temperiervorrichtung für Vorformlinge und/oder eine Temperiervorrichtung für Behälter so kann beispielsweise mittels der Wärmeaustauscheinrichtung 104 ein Wärmeaustausch zwischen der Temperiervorrichtung für Vorformlinge und/oder Behälter und der Herstellungsmaschine 101 durchgeführt werden.

In diesem Fall kann es beispielsweise vorgesehen sein, dass eine in der Herstellungsmaschine 101 freiwerdende Wärmemenge der Temperiervorrichtung zum Erwärmen eines Bauteils und/oder zum Erwärmen eines Vorformlings und/oder Behälters zugeführt wird. Bei der in der Herstellungsmaschine 101 freiwerdenden Wärmemenge kann es sich beispielsweise um eine Wärmemenge handeln, welche von der Herstellungsvorrichtung (etwa einem Werkzeug zum Formen der Vorformlinge) der Herstellungsmaschine 101 beim Herstellen der Vorformlinge abgegeben wird. Bei einer Ausgestaltung der Herstellungsmaschine 101 als Spritzgussmaschine kann es sich bei der Herstellungsvorrichtung auch um einen Injektor handeln, mittels welchem ein erwärmtes Vorformlingsausgangsmaterial in das Werkzeug der Spritzgussmaschine eingegeben wird. Bei der Wärmemenge kann es sich beispielsweise um eine beim Erwärmen des Herstellungsmaterials für Vorformlinge in der Herstellungsmaschine freiwerdende Wärmemenge handeln. Bei der Wärmemenge kann es sich auch um jede andere hier nicht explizit erwähnte Wärmemenge handeln, welche in der Herstellungsmaschine frei wird. Wie oben beschrieben, kann die freiwerdende Wärmemenge über ein Prozessmedium, wie beispielsweise Luft oder eine Flüssigkeit zwischen der Herstellungsmaschine 101 und der Temperiervorrichtung ausgetauscht werden.

Alternativ kann es beispielsweise auch vorgesehen sein, dass eine in der Temperiervorrichtung freiwerdende Wärmemenge der Herstellungsmaschine 101 über die Wärmeaustauscheinrichtung 104 zugeführt wird. Die in der Temperiervorrichtung freiwerdende Wärmemenge kann beispielsweise der Herstellungsmaschine zum Erwärmen des Materials zum Herstellen der Vorformlinge zugeführt werden. Weiterhin kann es auch vorgesehen sein, die in der Temperiervorrichtung freiwerdende Wärmemenge der Ausformvorrichtung der Herstellungsmaschine zuzuführen. Wie bereits oben beschrieben, kann der Wärmeaustausch mittels einem Prozessmedium, wie beispielsweise Luft oder einer Flüssigkeit realisiert werden.

Die eben genannten Beispiele sind als nicht beschränkend zu verstehen, so dass die Wärmemenge der Temperiervorrichtung auch jedem anderen Teil der Herstellungsmaschine 101 und die Wärmemenge der Herstellungsmaschine 101 jedem beliebigen Teil der Temperiervorrichtung zugeführt werden kann.

Ferner kann es auch vorgesehen sein, ein Prozessmedium, welches in der Herstellungsmaschine 101 zum Kühlen verwendet wird, zwischen der Herstellungsmaschine 101 und der Temperiervorrichtung zum Kühlen der Temperiervorrichtung oder eines mittels der Temperiervorrichtung behandelten Behälters auszutauschen. Wie weiter oben beschrieben, kann es sich bei dem Prozessmedium beispielsweise um ein Kühlmedium der Herstellungsmaschine 101 handeln, welches zum Kühlen der Ausformvorrichtung der Herstellungsmaschine, wie beispielsweise dem Injektor einer Spritzgussmaschine, verwendet wird. Beispielsweise kann es vorgesehen sein, dass das Kühlmedium der Herstellungsmaschine der Temperiervorrichtung zum Kühlen eines Bodens eines Behälters zugeführt wird.

Zusätzlich oder alternativ kann es auch vorgesehen sein, dass ein Kühlmedium der Temperiervorrichtung der Herstellungsmaschine 101 über die Wärmeaustauscheinrichtung 104 zugeführt wird und in der Herstellungsmaschine beispielsweise zum Kühlen eines Bauteils und/oder von mittels der Herstellungsmaschine 101 hergestellten Vorformlingen verwendet wird. Bei dem Kühlmedium kann es sich beispielsweise um Kühlluft oder eine Kühlflüssigkeit handeln.

Die oben hinsichtlich der Temperiervorrichtung gemachten Ausführungen treffen entsprechend auch auf jede andere Komponente der Blasformmaschine 102 zu oder jede andere Komponente der der Behälterbehandlungsanlage 100 zu.

## Patentansprüche

1. Behälterbehandlungsanlage umfassend eine Herstellungsmaschine für Vorformlinge, eine Blasformmaschine und wenigstens eine Wärmeaustauscheinrichtung, wobei die Herstellungsmaschine und die Blasformmaschine miteinander verblockt sind, wobei die wenigstens eine Wärmeaustauscheineinrichtung zum Wärmeaustausch zwischen der Herstellungsmaschine und wenigstens einer Komponente der Behälterbehandlungsanlage ausgebildet ist.

2. Behälterbehandlungsanlage nach Anspruch 1, wobei die Herstellungsmaschine und die Blasformmaschine über wenigstens eine Transportvorrichtung zum Massentransport von Vorformlingen und/oder über wenigstens eine Transportvorrichtung zum geordneten Transport von Vorformlingen miteinander verblockt sind.

3. Behälterbehandlungsanlage nach einem der Ansprüche 1 bis 2, wobei die Wärmeaustauscheinrichtung zum direkten Austausch eines Prozessmediums zwischen der Herstellungsmaschine und der wenigstens einen Komponente ausgebildet ist.

4. Behälterbehandlungsanlage nach Anspruch 3, wobei das Prozessmedium ein Kühlmedium der Herstellungsmaschine umfasst und die Wärmeaustauscheinrichtung ausgebildet ist, das Kühlmedium der wenigstens einen Komponente zum Kühlen eines Bauteils der Komponente und/oder zum Kühlen eines mittels der Komponente behandelten Vorformlings und/oder Behälters zuzuführen.

5. Behälterbehandlungsanlage nach einem der Ansprüche 1 bis 4, wobei die wenigstens eine Komponente eine Temperiervorrichtung für Vorformlinge und/oder eine Temperiervorrichtung für Behälter umfasst.

6. Behälterbehandlungsanlage nach Anspruch 5, wobei die Wärmeaustauscheinrichtung ausgebildet ist, eine in der Herstellungsmaschine freiwerdende Wärmemenge, der Temperiervorrichtung für Vorformlinge und/oder der Temperiervorrichtung für Behälter zum Temperieren eines Bauteils der jeweiligen Temperiervorrichtung und/oder zum Temperieren der Vorformlinge und/oder Behälter zuzuführen.

7. Behälterbehandlungsanlage nach Anspruch 5 oder 6, wobei die Wärmeaustauscheinrichtung ausgebildet ist, eine in der Temperiervorrichtung für Vorformlinge und/oder in der Temperiervorrichtung für Behälter freiwerdende Wärmemenge der Herstellungsmaschine zuzuführen.

8. Behälterbehandlungsanlage nach Anspruch 7, wobei die Wärmeaustauscheinrichtung ausgebildet ist, die in der Temperiervorrichtung für Behälter und/oder der Temperiervorrichtung für Behälter freiwerdende Wärmemenge der Herstellungsmaschine zum Temperieren eines Bauteils und/oder zum Temperieren eines Materials zum Herstellen von Vorformlingen zuzuführen.

9. Verfahren zum Herstellen von Behältern in einer Behälterbehandlungsanlage, wobei die Behälterbehandlungsanlage eine Herstellungsmaschine für Vorformlinge, eine Blasformmaschine und wenigstens eine Wärmeaustauscheinrichtung umfasst, wobei die Herstellungsmaschine und die Blasformmaschine miteinander verblockt sind, wobei die wenigstens eine Wärmeaustauscheineinrichtung zum Wärmeaustausch zwischen der Herstellungsmaschine und wenigstens einer Komponente der Behälterbehandlungsanlage ausgebildet ist.

10. Verfahren nach Anspruch 9, wobei die Herstellungsmaschine und die Blasformmaschine über wenigstens eine Transportvorrichtung zum Massentransport von Vorformlingen und/oder über wenigstens eine Transportvorrichtung zum geordneten Transport von Vorformlingen miteinander verblockt sind.

11. Verfahren nach Anspruch 9 oder 10, wobei ein Prozessmedium zwischen der Herstellungsmaschine und der wenigstens einen Komponente mittels der Wärmeaustauscheinrichtung direkt ausgetauscht wird.

12. Verfahren nach Anspruch 11, wobei das Prozessmedium ein Kühlmedium der Herstellungsmaschine umfasst und das Kühlmedium der wenigstens einen Komponente mittels der Wärmeaustauscheinrichtung zum Kühlen eines Bauteils der Komponente und/oder eines mittels der Komponente behandelten Vorformlings und/oder Behälters zugeführt wird.

13. Verfahren nach einem der Ansprüche 9 bis 12, wobei die wenigstens eine Komponente eine Temperiervorrichtung für Vorformlinge und/oder eine Temperiervorrichtung für Behälter umfasst.

14. Verfahren nach Anspruch 13, wobei eine in der Herstellungsmaschine freiwerdende Wärmemenge der Temperiervorrichtung für Vorformlinge und/oder der Temperiervorrichtung für Behälter mittels der Wärmeaustauscheinrichtung zum Temperieren eines Bauteils der jeweiligen Temperiervorrichtung und/oder zum Temperieren der Vorformlinge und/oder Behälter zugeführt wird.

15. Verfahren nach Anspruch 13 oder 14, wobei eine in der Temperiervorrichtung für Vorformlinge und/oder der Temperiervorrichtung für Behälter freiwerdende Wärmemenge, der Herstellungsmaschine mittels der Wärmeaustauscheinrichtung, insbesondere zum Temperieren eines Bauteils und/oder zum Temperieren eines Materials zum Herstellen von Vorformlingen, zugeführt wird.
